(19) **Europäisches Patentamt / European Patent Office / Office européen des brevets**

(11) **EP 4 617 244 A1**

(12) **EUROPEAN PATENT APPLICATION**
published in accordance with Art. 153(4) EPC

(43) Date of publication:
**17.09.2025 Bulletin 2025/38**

(21) Application number: **23888273.2**

(22) Date of filing: **14.04.2023**

(51) International Patent Classification (IPC):
**C03C 25/285** (2018.01)   **C08F 290/06** (2006.01)
**C08G 18/32** (2006.01)   **C08G 18/48** (2006.01)
**C08G 18/66** (2006.01)   **C08G 18/67** (2006.01)
**C09D 4/00** (2006.01)   **C09D 4/02** (2006.01)
**C09D 7/63** (2018.01)   **G02B 6/44** (2006.01)

(52) Cooperative Patent Classification (CPC):
**C03C 25/285; C08F 290/06; C08G 18/32;
C08G 18/48; C08G 18/66; C08G 18/67; C09D 4/00;
C09D 7/63; G02B 6/44**

(86) International application number:
**PCT/JP2023/015141**

(87) International publication number:
**WO 2024/100915 (16.05.2024 Gazette 2024/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **09.11.2022 JP 2022179249**

(71) Applicant: **Japan Fine Coatings Co., Ltd.
Tsuchiura-shi, Ibaraki, 300-4104 (JP)**

(72) Inventors:
• **SHINOHARA, Noriyasu
Kawasaki-shi, Kanagawa 213-0012 (JP)**
• **SUGIYAMA, Naoki
Kawasaki-shi, Kanagawa 213-0012 (JP)**

(74) Representative: **Levpat
c/o Covestro AG
Gebäude K12
51365 Leverkusen (DE)**

(54) **RADIATION CURABLE COMPOSITION FOR FORMING OPTICAL FIBER PRIMARY COAT LAYER, AND URETHANE (METH)ACRYLATE**

(57)   [Problem] The present invention provides a radiation curable composition for forming an optical fiber primary coating layer capable of forming a cured product having excellent flexibility and sufficient mechanical strength.
  [Solution] The present invention relates to a radiation curable composition for forming an optical fiber primary coating layer comprising (A) a urethane (meth)acrylate obtained by reacting at least (a) a polyether diol having a number average molecular weight of 2,000 to 5,000, (b) a diisocyanate compound, (c) a hydroxyl group-containing (meth)acrylate compound, and (d) a diol having a molecular weight of 500 or less, (B) a (meth)acrylate compound other than the component (A), and (C) a radiation polymerization initiator.

EP 4 617 244 A1

**Description**

Technical Field

The present invention relates to a radiation curable composition for forming an optical fiber primary coating layer and a urethane (meth)acrylate suitable for the radiation curable composition, and particularly, relates to a radiation curable composition for forming an optical fiber primary coating layer capable of forming a cured product having excellent flexibility and sufficient mechanical strength.

Background Art

An optical fiber is composed of a glass fiber obtained by hot-melt spinning glass, a coating layer (alternatively, also referred to as a covering layer) provided on the glass fiber for the purpose of protection and reinforcement, and the like. For example, the optical fiber is produced by first providing a flexible primary coating layer (hereinafter, referred to as a "primary coating layer) on a surface of a glass fiber, and providing a highly rigid secondary coating layer (hereinafter, also referred to as a "secondary coating layer) on the primary coating layer. A tape-shaped optical fiber or optical fiber cable in which a plurality of optical fibers provided with a coating layer are fixed with a binding material is also well known. As a method for forming a coating layer on a glass fiber, for example, a method in which a liquid curable resin composition is applied to a glass fiber and then cured by heat or light, in particular, ultraviolet rays is widely used.

JP 6526012 B2 (Patent Literature 1) describes an invention relating to a radiation curable covering composition that produces a fiber covering having a low Young's modulus and high tear strength, and particularly, describes a fiber covering composition comprising a polyether urethane acrylate compound (specifically, a polyether urethane acrylate compound formed by a reaction of a diisocyanate compound with a hydroxyacrylate compound and a polyol compound) and a di-adduct compound (specifically, a diacrylate compound formed by a reaction of a diisocyanate compound with a hydroxyacrylate compound), in which the di-adduct compound is present in an amount of 2.35% by mass to 4.82% by mass).

JP 2017-141125 A (Patent Literature 2) describes an invention relating to a radiation curable resin composition having suitable properties as a primary material for an optical fiber, and particularly, describes a radiation curable resin composition for forming an optical fiber primary covering layer that contains (A) a urethane (meth)acrylate having a number average molecular weight of 4,000 or more and (D) a radiation polymerization initiator, the urethane (meth)acrylate being a reaction product of (a) a diol having a number average molecular weight of 3,000 or less, (b) a diisocyanate, and (c) a hydroxyl group-containing (meth)acrylate, in which the component (A) is contained in the entire composition in an amount of 60% by mass or more.

JP 5788672 B2 (Patent Literature 3) describes an invention relating to a radiation curable resin composition having suitable properties as a primary material for an optical fiber, and particularly describes a radiation curable resin composition for forming an optical fiber primary covering layer containing: 50 to 90% by mass of (A) a urethane oligomer comprising (a1) a urethane oligomer that comprises a reaction product of an aliphatic polyether diol, a diisocyanate, and a monohydric alcohol or (a2) a urethane oligomer that has an average of more than **1.0** structural units derived from a polyether diol and does not have a (meth)acryloyl group, (A) the urethane oligomer being obtained by reacting a reaction product of an aliphatic polyether diol and a diisocyanate with a monohydric alcohol and then reacting with a hydroxyl group-containing (meth)acrylate; 5 to 45% by mass of (B) a monomer having one ethylenically unsaturated group; and 2% by mass or less of (C) a monomer having two or more ethylenically unsaturated groups.

Citation List

Patent Literatures

Patent Literature 1: JP 6526012 B2
Patent Literature 2: JP 2017-141125 A
Patent Literature 3: JP 5788672 B2

Summary of Invention

Technical Problem

In a case where pressure is locally applied to a side surface of an optical fiber, the core of a glass fiber at a portion to which the pressure is applied is bent with a small curvature, and as a result, an optical loss may occur. From the viewpoint of suppressing such an optical loss (also referred to as a micro-bending loss), it is desirable that a primary coating layer is sufficiently flexible. On the other hand, when the primary coating layer is flexible, sufficient mechanical strength (strength at break and elongation at break) may not be obtained. All of the radiation curable compositions described in Patent Literatures 1 to 3 are radiation curable compositions for forming an optical fiber primary coating layer, and are intended to achieve both flexibility and mechanical strength, but there is still room for improvement.

Therefore, an object of the present invention is to provide a radiation curable composition for forming an optical fiber primary coating layer capable of forming a cured product having excellent flexibility and sufficient mechanical strength by a method different from the related art. In addition, another object of the present invention is to provide a urethane (meth) acrylate suitable for a radiation curable composition for forming an optical fiber primary coating layer.

Solution to Problem

As a result of conducting intensive studies to achieve the above object, the present inventors have found that a radiation curable composition capable of forming a cured product having excellent flexibility and sufficient mechanical strength can be provided by blending a urethane (meth)acrylate obtained by reacting at least (a) a polyether diol having a number average molecular weight of 2,000 to 5,000, (b) a diisocyanate compound, (c) a hydroxyl group-containing (meth) acrylate compound, and (d) a diol having a molecular weight of 500 or less, thereby accomplishing the present invention.

Accordingly, the radiation curable composition of the present invention is a radiation curable composition for forming an optical fiber primary coating layer containing: (A) a urethane (meth)acrylate obtained by reacting at least the following components (a), (b), (c), and (d):

(a) a polyether diol having a number average molecular weight of 2,000 to 5,000;
(b) a diisocyanate compound;
(c) a hydroxyl group-containing (meth)acrylate compound; and
(d) a diol having a molecular weight of 500 or less;
(B) a (meth)acrylate compound other than the component (A); and
(C) a radiation polymerization initiator.

In a preferred embodiment of the radiation curable composition of the present invention, the component (d) is a diol having a molecular weight of 200 or less.

In another preferred embodiment of the radiation curable composition of the present invention, the component (b) is tolylene diisocyanate (TDI) or isophorone diisocyanate (IPDI).

In addition, the urethane (meth)acrylate of the present invention is a urethane (meth)acrylate obtained by reacting at least the following components (a), (b), (c), and (d):

(a) a polyether diol having a number average molecular weight of 2,000 to 5,000;
(b) a diisocyanate compound;
(c) a hydroxyl group-containing (meth)acrylate compound; and
(d) a diol having a molecular weight of 500 or less.

In a preferred embodiment of the urethane (meth)acrylate of the present invention, the component (d) is a diol having a molecular weight of 200 or less.

In another preferred embodiment of the urethane (meth)acrylate of the present invention, the component (b) is tolylene diisocyanate (TDI) or isophorone diisocyanate (IPDI).

Advantageous Effects of Invention

According to the radiation curable composition of the present invention, it is possible to provide a radiation curable composition for forming an optical fiber primary coating layer capable of forming a cured product having excellent flexibility and sufficient mechanical strength. In addition, according to the urethane (meth)acrylate of the present invention, it is possible to provide a urethane (meth)acrylate suitable for such a radiation curable composition for forming an optical fiber primary coating layer.

Description of Embodiments

Hereinafter, the present invention will be described in detail. The present invention relates to a radiation curable composition for forming an optical fiber primary coating layer and a urethane (meth)acrylate.

In the present specification, the "optical fiber primary coating layer" is understood to be a coating layer disposed at a position closest to a glass fiber among coating layers provided on the glass fiber. The primary coating layer may be provided so as to cover at least a part of a surface of the glass fiber. It is understood that "for forming an optical fiber primary coating layer" means that a subject may be used in forming an optical fiber primary coating layer or may be a thing for forming an optical fiber primary coating layer. The radiation curable composition of the present invention is particularly preferred as a material for forming an optical fiber primary coating layer (also referred to as a primary material).

In the present specification, the "radiation curable composition" is understood to be a composition that can be cured by irradiation with radiation. Here, the "radiation" is an infrared ray, a visible ray, an ultraviolet ray, an X-ray, an electron beam, an $\alpha$ ray, a $\beta$ ray, a $\gamma$ ray, or the like, and in particular, an ultraviolet ray is preferable.

In the present specification, the "urethane (meth)acrylate" is understood as a compound having one or more (meth)acryloyl groups in the molecule and a urethane bond (-NHCOO-) in repeating units of the main chain. Here, the "(meth)acryloyl group" means a methacryloyl group or an acryloyl group. Examples of the urethane (meth)acrylate include a compound having a methacryloyl group, a compound having an acryloyl group, and a compound having a methacryloyl group and an acryloyl group. The urethane (meth)acrylate can be generally formed by reacting at least a diol compound, a diisocyanate compound, and a hydroxyl group-containing (meth)acrylate compound to form a urethane bond.

The radiation curable composition of the present invention is a radiation curable composition for forming an optical fiber primary coating layer containing the following components (A), (B), and (C).

(A) Urethane (meth)acrylate
(B) (Meth)acrylate compound other than component (A)
(C) Radiation polymerization initiator

Hereinafter, the components (A), (B), and (C) used in the radiation curable composition of the present invention and additional components used as necessary will be described.

Component (A): urethane (meth)acrylate

(A) The urethane (meth)acrylate is a urethane (meth)acrylate obtained by reacting at least the following components (a), (b), (c), and (d).

(a) Polyether diol having number average molecular weight of 2,000 to 5,000
(b) Diisocyanate compound
(c) Hydroxyl group-containing (meth)acrylate compound
(d) Diol having molecular weight of 500 or less

In the present specification, the urethane (meth)acrylate described here is also referred to as a "urethane (meth) acrylate of the present invention".

Component (a): polyether diol having number average molecular weight of 2,000 to 5,000

The polyether diol having a number average molecular weight of 2,000 to 5,000 can impart excellent flexibility to the coating layer. Usually, in a case where such a polyether diol is used, there is a problem in the mechanical strength of the coating layer, but in the radiation curable composition of the present invention, the polyether diol is used in combination with (d) a diol having a molecular weight of 500 or less as described below, such that it is possible to form a coating layer having excellent flexibility and sufficient mechanical strength. In addition, the polyether diol in such a molecular weight range is also preferable from the viewpoint of obtaining a viscosity preferred for high-speed coatability of the radiation curable composition. As the component (a), a polyether diol having a number average molecular weight of 3,000 to 4,000 is preferable.

In the present specification, the number average molecular weight is a value measured by a gel permeation chromatography method and converted based on a standard polystyrene calibration curve.

The polyether diol having a number average molecular weight of 2,000 to 5,000 is not particularly limited, but an aliphatic polyether diol is preferable, and for example, polyethylene glycol, polypropylene glycol, polytetramethylene glycol, polyhexamethylene glycol, polyheptamethylene glycol, polydecamethylene glycol, and an aliphatic polyether diol obtained by ring-opening polymerization of two or more ionically polymerizable cyclic compounds are preferable.

Examples of the ionically polymerizable cyclic compound include cyclic ethers such as ethylene oxide, propylene oxide, butene-1-oxide, isobutene oxide, 3,3-bischloromethyloxetane, tetrahydrofuran, 2-methyltetrahydrofuran, 3-methyltetrahydrofuran, dioxane, trioxane, tetraoxane, cyclohexene oxide, styrene oxide, epichlorohydrin, glycidyl methacrylate, allylglycidyl ether, allyl glycidyl carbonate, butadiene monooxide, isoprene monooxide, vinyl oxetane, vinyl tetrahydrofuran, vinyl cyclohexene oxide, phenyl glycidyl ether, butyl glycidyl ether, and glycidyl benzoate.

Specific examples of the polyether diol obtained by ring-opening copolymerization of two or more ionically polymerizable cyclic compounds include bipolymers obtained from combinations of tetrahydrofuran and propylene oxide, tetrahydrofuran and 2-methyltetrahydrofuran, tetrahydrofuran and 3-methyltetrahydrofuran, tetrahydrofuran and ethylene oxide, propylene oxide and ethylene oxide, butene-1-oxide and ethylene oxide, or the like; and terpolymers obtained from a combination of tetrahydrofuran, butene-1-oxide, and ethylene oxide, or the like. In addition, a polyether diol obtained by ring-opening copolymerization of the ionically polymerizable cyclic compound and cyclic imines such as ethyleneimine; cyclic lactone acids such as β-propiolactone and glycolic lactide; or dimethylcyclopolysiloxanes can be used.

The aliphatic polyether diol as the component (a) is also available as a commercially available product, for example, PTMG2000, PTMG3000, or PTMG4000 (manufactured by Mitsubishi Chemical Corporation), EXCENOL2020, EXCENOL3020, EXCENOL3030, EXCENOL4030, or PREMINOL S3006 (manufactured by AGC Inc.), UNIOL D-2000 or UNIOL D-4000 (manufactured by NOF CORPORATION), or the like.

Among these aliphatic polyether diols, it is preferable to use a diol having a number average molecular weight of 2,000 to 5,000 which is a ring-opening polymer of one or two or more ionically polymerizable cyclic compounds having 2 to 4 carbon atoms from the viewpoint of compatibility between the flexibility of the coating layer and the high-speed coatability of the radiation curable composition. Such an aliphatic polyether diol is more preferably a ring-opening polymer of one or two or more selected from ethylene oxide, propylene oxide, butene-1-oxide, and isobutene oxide, which is particularly a diol having a number average molecular weight of 3,000 to 4,000.

The amount of structural units derived from the component (a) in the component (A) is preferably 74% by mass or more and less than 91% by mass, and more preferably 78% by mass or more and less than 87% by mass.

(a) The polyether diols having a number average molecular weight of 2,000 to 5,000 may be used alone or in combination of two or more thereof.

Component (b): diisocyanate compound

The diisocyanate compound can react with hydroxyl groups of the component (a), the component (c), and the component (d) to form a urethane bond.

Examples of the diisocyanate compound include an aromatic diisocyanate, an alicyclic diisocyanate, and an aliphatic diisocyanate. Examples of the aromatic diisocyanate include 2,4-tolylene diisocyanate, 2,6-tolylene diisocyanate, 1,3-xylylene diisocyanate, 1,4-xylylene diisocyanate, 1,5-naphthalene diisocyanate, m-phenylene diisocyanate, p-phenylene diisocyanate, 3,3'-dimethyl-4,4'-diphenylmethane diisocyanate, 4,4'-diphenylmethane diisocyanate, 3,3'-dimethylphenylene diisocyanate, 4,4'-biphenylene diisocyanate, bis(2-isocyanatoethyl) fumarate, 6-isopropyl-1,3-phenyl diisocyanate, 4-diphenylpropane diisocyanate, and tetramethylxylylene diisocyanate. Examples of the alicyclic diisocyanate include isophorone diisocyanate, methylene bis(4-cyclohexyl isocyanate), hydrogenated diphenylmethane diisocyanate, hydrogenated xylylene diisocyanate, 2,5-bis(isocyanatomethyl)-bicyclo[2.2.1]heptane, and 2,6-bis(isocyanatomethyl)-bicyclo[2.2.1]heptane. Examples of the aliphatic diisocyanate include 1,6-hexane diisocyanate, 2,2,4-trimethylhexamethylene diisocyanate, and lysine diisocyanate.

Among these isocyanate compounds, an aromatic diisocyanate is more preferable, and tolylene diisocyanate (TDI) such as 2,4-tolylene diisocyanate or 2,6-tolylene diisocyanate is particularly preferable, from the viewpoint of obtaining an economical and stable quality composition.

In addition, from the viewpoint of increasing a urethane group concentration in (A) the urethane (meth)acrylate, it is preferable to use a diisocyanate compound not having very large molecular weight. In a preferred embodiment, the component (d) is tolylene diisocyanate (TDI) or isophorone diisocyanate (IPDI).

The amount of structural units derived from the component (b) in the component (A) is preferably 5% by mass or more and less than 17% by mass, and more preferably 8% by mass or more and less than 14% by mass.

(b) The diisocyanate compounds may be used alone or in combination of two or more thereof.

Component (c): hydroxyl group-containing (meth)acrylate compound

As the hydroxyl group-containing (meth)acrylate compound used for synthesis of (A) the urethane (meth) acrylate, a hydroxyl group-containing (meth)acrylate in which a hydroxyl group is bonded to a primary carbon atom (referred to as a first hydroxyl group-containing (meth)acrylate) and a hydroxyl group-containing (meth)acrylate in which a hydroxyl group is bonded to a secondary carbon atom (referred to as a second hydroxyl group-containing (meth)acrylate) are preferable, and a first hydroxyl group-containing (meth)acrylate is particularly preferable. A hydroxyl group-containing (meth)acrylate in which a hydroxyl group is bonded to a tertiary carbon atom (referred to as a third hydroxyl group-containing (meth)acrylate) is not preferable because it is poor in reactivity with an isocyanate group (hereinafter, also referred to as "NCO").

Examples of the first hydroxyl group-containing (meth)acrylate include 2-hydroxyethyl (meth)acrylate, 3-hydroxypropyl (meth)acrylate, 4-hydroxybutyl (meth)acrylate, 1,6-hexanediol mono(meth)acrylate, pentaerythritol tri(meth)acrylate, dipentaerithritol penta(meth)acrylate, neopentyl glycol mono(meth)acrylate, trimethylolpropane di(meth)acrylate, and trimethylolethane di(meth)acrylate.

Examples of the second hydroxyl group-containing (meth)acrylate include 2-hydroxypropyl (meth)acrylate, 2-hydroxybutyl (meth)acrylate, 2-hydroxy-3-phenyloxypropyl (meth)acrylate, and 4-hydroxycyclohexyl (meth)acrylate, and also include compounds obtained by an addition reaction of a glycidyl group-containing compound such as alkyl glycidyl ether, allyl glycidyl ether, or glycidyl (meth)acrylate with (meth)acrylic acid.

The amount of structural units derived from the component (c) in the component (A) is preferably 2% by mass or more and less than 8% by mass, and more preferably 3% by mass or more and less than 7% by mass.

(c) The hydroxyl group-containing (meth)acrylates may be used alone or in combination of two or more thereof.

Component (d): diol having molecular weight of 500 or less

The diol having a molecular weight of 500 or less falls under a low molecular weight diol as the diol used for synthesis of (A) the urethane (meth)acrylate. By using such a low molecular weight diol, the mechanical strength of the coating layer can be significantly improved without reducing the flexibility of the coating layer. When a urethane (meth)acrylate using a polyether diol having a number average molecular weight of 2,000 to 5,000 as a raw material is used in a radiation curable composition, a coating layer having a low Young's modulus and excellent flexibility can be formed, but there is a problem in mechanical strength. The present inventors have found that when the polyether diol having a number average molecular weight of 2,000 to 5,000 and the diol having a molecular weight of 500 or less are used in the radiation curable composition of the present invention, a coating layer having excellent flexibility and sufficient mechanical strength can be formed. As the component (d), a diol having a molecular weight of 200 or less is preferable, and a diol having a molecular weight of 100 or less is particularly preferable.

The diol having a molecular weight of 500 or less is not particularly limited, and examples thereof include 1,2-ethanediol, 1,2-propanediol (also referred to as propylene glycol), 1,3-propanediol, 1,2-butanediol, 1,3-butanediol, 1,4-butanediol, 2,3-butanediol, 2-methyl-1,3-propanediol, 1,2-pentanediol, 1,3-pentanediol, 1,5-pentanediol, 2,2-dimethyl-1,3-propanediol, 1,2-hexanediol, 1,6-hexanediol, 2,5-hexanediol, 3-methyl-1,5-pentanediol, 1,4-cyclohexanediol, 2-methyl-2-propyl-1,3-propanediol, 2-ethyl-1,3-hexanediol, 2,2,4-trimethyl-1,3-pentanediol, 1,4-benzenedimethanol, 2,4-diethyl-1,5-pentanediol, 1,2-indanediol, 2-butyl-2-ethyl-1,3-propanediol, 1,9-nonanediol, 1,2-decanediol, 1,10-decanediol, 3-hydroxy-2,2-dimethylpropyl 3-hydroxy-2,2-dimethylpropionate, 3-(2-ethylhexyloxy)-1,2-propanediol, 1,2-dodecanediol, 5,6-dodecanediol, 1,12-dodecanediol, 2,2-diisoamyl-1,3-propanediol, 1,2-tetradecanediol, 1,2-hexadecanediol, 1,16-hexanediol, 1,18-octadecanediol, 2,2-di-n-octyl-1,3-propanediol, and an aliphatic polyether diol within a range that satisfies a requirement of a molecular weight of 500 or less. 1,2-ethanediol, 1,2-propanediol, 1,3-propanediol, and the aliphatic polyether diol are particularly preferable. As the aliphatic polyether diol, for example, polyethylene glycol, polypropylene glycol, polytetramethylene glycol, polyhexamethylene glycol, polyheptamethylene glycol, polydecamethylene glycol, and an aliphatic polyether diol obtained by ring-opening copolymerization of two or more ionically polymerizable cyclic compounds are preferable.

Examples of the ionically polymerizable cyclic compound include cyclic ethers such as ethylene oxide, propylene oxide, butene-1-oxide, isobutene oxide, 3,3-bischloromethyloxetane, tetrahydrofuran, 2-methyltetrahydrofuran, 3-methyltetrahydrofuran, dioxane, trioxane, tetraoxane, cyclohexene oxide, styrene oxide, epichlorohydrin, glycidyl methacrylate, allyl glycidyl ether, allyl glycidyl carbonate, butadiene monooxide, isoprene monooxide, vinyl oxetane, vinyl tetrahydrofuran, vinyl cyclohexene oxide, phenyl glycidyl ether, butyl glycidyl ether, and glycidyl benzoate.

Specific examples of the polyether diol obtained by ring-opening copolymerization of two or more ionically polymerizable cyclic compounds include bipolymers obtained from combinations of tetrahydrofuran and propylene oxide, tetrahydrofuran and 2-methyltetrahydrofuran, tetrahydrofuran and 3-methyltetrahydrofuran, tetrahydrofuran and ethylene oxide, propylene oxide and ethylene oxide, and butene-1-oxide and ethylene oxide, or the like; and terpolymers obtained from a combination of tetrahydrofuran, butene-1-oxide, and ethylene oxide, or the like. In addition, a polyether diol obtained by ring-opening copolymerization of the ionically polymerizable cyclic compound and cyclic imines such as ethyleneimine; cyclic lactone acids such as β-propiolactone and glycolic lactide; or dimethylcyclopolysiloxanes can be used.

As for polymeric diols such as aliphatic polyether diols, a diol having a number average molecular weight of 500 or less is referred to as the "diol having a molecular weight of 500 or less" of the component (d).

The aliphatic polyether diol as the component (d) is also available as a commercially available product, for example, PTMG250 (manufactured by Mitsubishi Chemical Holdings), EXCENOL420 or EXCENOL430 (manufactured by AGC Inc.), PEG200, PEG300, PEG400, UNIOX G-450, UNIOL D-250, UNIOL D-400G, or UNIOL TG-330 (manufactured by NOF CORPORATION), or the like.

Among these aliphatic polyether diols, it is preferable to use a diol having a number average molecular weight of 500 or less which is a ring-opening polymer of one or two or more ionically polymerizable cyclic compounds having 2 to 4 carbon atoms from the viewpoint of improving the mechanical strength of the coating layer. Such an aliphatic polyether diol is more preferably a diol having a number average molecular weight of 200 or less which is a ring-opening polymer of one or two or more oxides selected from ethylene oxide, propylene oxide, butene-1-oxide, and isobutene oxide, and is particularly preferably a ring-opening polymer of propylene oxide having a number average molecular weight of less than 100.

Since the component (d) can increase the urethane group concentration in the component (A) even in a case where the component (a) is used as a sufficiently high molecular weight component, it is possible to obtain a cured product having high mechanical strength (strength at break and elongation at break) while suppressing the Young's modulus to be low by using the composition of the present invention. In addition to the diol, a compound having a combination of an amino group and a hydroxyl group, a diamine, and a compound that produces urea or thiourea by reaction with an isocyanate, such as a dithiol, can also be used instead of the component (d) or together with the component (d). However, it is preferable that the component (d) is a diol from the viewpoint of controlling reactivity.

The amount of structural units derived from the component (d) in the component (A) is preferably 0.5% by mass or more and less than 4% by mass, more preferably 0.5% by mass or more and less than 3% by mass, and is particularly preferably 0.7% by mass or more and less than 2% by mass.

(d) The diols having a molecular weight of 500 or less may be used alone or in combination of two or more thereof.

Component (e): additional component

In synthesis of (A) the urethane (meth)acrylate, an additional component may be used in addition to the components (a) to (d). In the present specification, the component that does not fall under the components (a) to (d) is also referred to as "a component (e)". Examples of the component (e) include a monohydric alcohol or a polyhydric alcohol that does not fall under the above (a), (c), or (d), mercaptosilane, and aminosilane. By using the component (e), the component (A) having one (meth)acryloyl group can be obtained by binding to a terminal of the component (A) instead of the (meth)acryloyl group.

As the monohydric alcohol that is the component (e), for example, a lower alcohol having 1 to 8 carbon atoms is preferable, and an aliphatic alcohol such as methanol, n-octanol, or 2-ethylhexanol is more preferable. Examples of the polyhydric alcohol as the component (e) include glycerin, 1,2,3-propylenetriol, and saccharides. In a case where the component (d) is used, two or more components (d) may be used. In addition, as each of the mercaptosilane and the aminosilane as the component (e), for example, 3-mercaptopropylmethyldimethoxysilane, 3-mercaptopropyltrimethoxysilane, 3-aminopropyltriethoxysilane, N-2-(aminoethyl)-3-aminopropylmethyldimethoxysilane, N-2-(aminoethyl)- 3-aminopropyltrimethoxysilane, 3-aminopropyltrimethoxysilane, and the like can be preferably used. In a case where the component (e) is used, two or more components (e) may be used.

The amount of structural units derived from the component (e) in the component (A) is preferably less than 4% by mass, more preferably less than 3% by mass, and particularly preferably less than 2% by mass.

The synthesis of (A) the urethane (meth)acrylate is preferably performed by reacting the diols [the component (a) and the component (d)] with the diisocyanate [the component (b)], and then reacting with the hydroxyl group-containing (meth)acrylate [the component (c)], in the presence of dibutyltin dilaurate or the like as a urethane synthesis catalyst. In addition, when the diol and the diisocyanate are reacted, the order of the reaction of the diol and the diisocyanate is not particularly limited. For example, the component (b) may be reacted with a mixture of the component (a) and the component (d), or the order of reacting the component (a) with a part of the component (b), and then reacting the component (d) with the remaining component (b), or reacting the component (d) with a part of the component (b), and then reacting the component (a) with the remaining component (b) may be used. In consideration of productivity, it is preferable to react the component (b) with the mixture of the component (a) and the component (d). In addition, in a case where the component (e) is used, the component (e) can be reacted simultaneously with or before or after the reaction with the hydroxyl group-containing (meth)acrylate after the reaction of the diol and the diisocyanate. Here, in a case where a monohydric alcohol and/or an aminosilane is used as the component (e), after the reaction of the diol and the diisocyanate, the product may be sequentially reacted with the hydroxyl group-containing (meth)acrylate and the component (e), the product may be sequentially reacted with the component (e) and the hydroxyl group-containing (meth)acrylate, or the product may be reacted with both the hydroxyl group-containing (meth)acrylate and the component (e), and it is preferable to react the product obtained by the reaction of the diol and the diisocyanate with the hydroxyl group-containing (meth)acrylate and the component (e) in this order. On the other hand, in a case where mercaptosilane is used as the component (e), after the reaction of the diol and the diisocyanate, the product may be sequentially reacted with the hydroxyl group-containing (meth)acrylate and the component (e), the product may be sequentially reacted with the component (e) and the hydroxyl group-containing (meth)acrylate, or the product may be reacted with both the hydroxyl group-containing (meth)acrylate and the component (e), and it is preferable to react the product obtained by the reaction of the diol and the diisocyanate with the component (e) and the hydroxyl group-containing (meth)acrylate in this order.

(A) The urethane (meth)acrylate obtained by the above method has, for example, a structure represented by the following Formula (1).

$$[c]-[b]-[a]-[b]-[d]-[b]-[c] \quad \text{Formula (1)}$$

In Formula (1), [a], [b], [c], and [d] are structural units derived from the component (a), the component (b), the component (c), and the component (d), respectively. All of the bonds represented by "-" are urethane bonds.

In a case where the component (e) is used for the synthesis of (A) the urethane (meth)acrylate, (i) a compound having both a (meth)acryloyl group and a structure derived from the component (e) and containing a urethane bond (-NHCOO-) in repeating units of the main chain, for example, a compound having one (meth)acryloyl group and one structure derived from the component (e) and containing a urethane bond (-NHCOO-) in repeating units of the main chain, or (ii) a compound having a structure derived from the component (e) but having no (meth)acryloyl group and containing a urethane bond (-NHCOO-) in repeating units of the main chain, for example, a compound having two structures derived from the component (e) and containing a urethane bond (-NHCOO-) in repeating units of the main chain can be produced.

(A) The urethane (meth)acrylate obtained in the case where the component (e) is used has, for example, a structure represented by the following Formula (2) in addition to the structure represented by Formula (1) or instead of the structure represented by Formula (1).

$$[c]-[b]-[a]-[b]-[d]-[b]-[e] \quad \text{Formula (2)}$$

In Formula (2), the bond "-" connected to [e] is a urethane bond, a thiourethane bond, or a urea bond depending on a chemical species of the component (e). The other bonds "-" are urethane bonds.

The urethane group concentration in (A) the urethane (meth)acrylate is preferably 1.0 mmol/g or more, more preferably 1.1 mmol/g or more, still more preferably 1.15 mmol/g or more, and particularly preferably 1.2 mmol/g or more. In addition, the urethane group concentration in (A) the urethane (meth)acrylate is preferably less than 1.7 mmol/g. When the urethane group concentration is within the specified range, a cured product of the radiation curable composition of the present invention can have high strength while suppressing an increase in Young's modulus. The urethane group concentration can be increased by using a low molecular weight diol [the component (d)] or a low molecular weight diisocyanate [preferably tolylene diisocyanate (TDI) or isophorone diisocyanate (IPDI)].

In the present specification, the "urethane group concentration" refers to the amount of a bond generated by the reaction of an isocyanate group and an isocyanate reactive group contained in the urethane (meth)acrylate. Since a typical bond that can be generated by the reaction is a urethane bond, it is referred to as the "urethane group concentration", but the bond generated by the reaction of the isocyanate group and the isocyanate reactive group is not limited to the urethane bond (-NHCOO-), and examples thereof include a thiourethane bond (-NH-COS-) and a urea bond (-NH-CO-NH-). Therefore, the "urethane group concentration" can also be expressed as the "concentration of the bond generated by the reaction of the isocyanate group and the isocyanate reactive group". Examples of the isocyanate reactive group include a hydroxy group (-OH), a mercapto group (-SH), and an amino group ($-NH_2$). In a case where mercaptosilane and aminosilane are used as the component (e), a thiourethane group and a urea group are generated, respectively.

A content of (A) the urethane (meth)acrylate in the radiation curable composition of the present invention is preferably 50 parts by mass or more and less than 95 parts by mass, more preferably 60 parts by mass or more and less than 95 parts by mass, and particularly preferably 70 parts by mass or more and less than 90 parts by mass, per 100 parts by mass of the composition. When the content of (A) the urethane (meth)acrylate is within the specified range, high-speed coatability of the radiation curable composition of the present invention and appropriate flexibility of the optical fiber primary coating layer can be obtained.

(A) The urethane (meth)acrylates may be used alone or in combination of two or more thereof.

Component (B): (meth)acrylate compound other than component (A)

The radiation curable composition of the present invention comprises a (meth)acrylate compound that does not fall under (A) the urethane (meth)acrylate. In the present specification, such a (meth)acrylate compound is referred to as the "(meth)acrylate compound other than the component (A)" or the "component (B)". The component (B) is typically a monomer having one or more (meth)acryloyl groups in the molecule, and is preferably a monomer having one (meth) acryloyl group in the molecule. In a case where the component (B) is a monomer, the monomer is often used for diluting a composition comprising (A) the urethane (meth)acrylate, and thus may be referred to as a reactive diluent monomer. Examples of the component (B) include an aliphatic structure-containing (meth)acrylate, an alicyclic structure-containing (meth)acrylate, and an aromatic structure-containing (meth)acrylate. In addition, the component (B) also includes a (meth) acrylate compound having a functional group different from a (meth)acryloyl group, such as a hydroxyl group-containing (meth)acrylate. Furthermore, in the present specification, a compound in which a (meth)acryloyl group is bonded to a nitrogen atom, such as (meth)acrylamide or acryloylmorpholine, also falls under the (meth)acrylate compound, and is included in the component (B). Note that the component (B) also includes an oligomer or a polymer that does not fall under the component (A).

Examples of the aliphatic structure-containing (meth)acrylate having one (meth)acryloyl group in the molecule among the components (B) include butyl (meth)acrylate, isobutyl (meth)acrylate, t-butyl (meth)acrylate, amyl (meth) acrylate, isoamyl (meth)acrylate, hexyl (meth)acrylate, heptyl (meth)acrylate, octyl (meth)acrylate, 2-ethylhexyl (meth) acrylate, isooctyl (meth)acrylate, nonyl (meth)acrylate, isononyl (meth)acrylate, decyl (meth)acrylate, isodecyl (meth) acrylate, undecyl (meth)acrylate, lauryl (meth)acrylate, stearyl (meth)acrylate, isostearyl (meth)acrylate, tetrahydrofurfuryl (meth)acrylate, polyethylene glycol mono(meth)acrylate, polypropylene glycol mono(meth)acrylate, methoxyethylene glycol(meth)acrylate, ethoxyethyl (meth)acrylate, methoxypolyethylene glycol (meth)acrylate, and methoxypolypropylene glycol (meth)acrylate.

Examples of the alicyclic structure-containing (meth)acrylate having one (meth)acryloyl group in the molecule include isobornyl (meth)acrylate, bornyl (meth)acrylate, tricyclodecanyl (meth)acrylate, dicyclopentanyl (meth)acrylate, dicyclopentenyl (meth)acrylate, cyclohexyl (meth)acrylate, 4-butylcyclohexyl (meth)acrylate, and tetrahydrofurfuryl (meth)acrylate.

Examples of the aromatic structure-containing (meth)acrylate having one (meth)acryloyl group in the molecule include benzyl (meth)acrylate.

In addition, as the hydroxyl group-containing (meth)acrylate having one (meth)acryloyl group in the molecule, a hydroxyl group-containing (meth)acrylate compound used for the synthesis of (A) the urethane (meth)acrylate can be used, and preferably, examples thereof include 2-hydroxyethyl (meth)acrylate, 2-hydroxypropyl (meth)acrylate, and 4-hydroxybutyl acrylate.

In addition, examples of the (meth)acrylate compound having one (meth)acryloyl group in the molecule include (meth)acrylamides such as diacetone (meth)acrylamide, isobutoxymethyl (meth)acrylamide, N,N-dimethyl (meth)acrylamide, and t-octyl (meth)acrylamide, and acryloylmorpholine.

Among the components (B) having one (meth)acryloyl group in the molecule, an aliphatic structure-containing (meth)acrylate such as 2-ethylhexyl (meth)acrylate is preferable.

A content of the component (B) having one (meth)acryloyl group in the molecule in the radiation curable composition of the present invention is preferably 5 parts by mass or more and 45 parts by mass or less, and is particularly preferably 10 parts by mass or more and 30 parts by mass or less, per 100 parts by mass of the composition.

Examples of the (meth)acrylate compound having two or more (meth)acryloyl groups in the molecule among the components (B) include trimethylolpropane tri(meth)acrylate, pentaerythritol tri(meth)acrylate, ethylene glycol di(meth) acrylate, tetraethylene glycol di(meth)acrylate, polyethylene glycol di(meth)acrylate, 1,4-butanediol di(meth)acrylate, 1,6-hexanediol di(meth)acrylate, neopentyl glycol di(meth)acrylate, trimethylolpropane trioxyethyl (meth)acrylate, tris(2-hydroxyethyl)isocyanurate tri(meth)acrylate, tris(2-hydroxyethyl)isocyanurate di(meth)acrylate, tricyclodecanedimethanol di(meth)acrylate, a di(meth)acrylate of a diol of an adduct of an ethylene oxide or propylene oxide of bisphenol A, a di(meth)acrylate of a diol of an adduct of an ethylene oxide or propylene oxide of hydrogenated bisphenol A, and an epoxy (meth)acrylate obtained by adding a (meth)acrylate to diglycidyl ether of bisphenol A.

The content of the component (B) having two or more (meth)acryloyl groups in the molecule in the radiation curable composition of the present invention is preferably 2 parts by mass or less (0 to 2 parts by mass), and more preferably 1.5 parts by mass or less (0 to 1.5 parts by mass), per 100 parts by mass of the composition, from the viewpoint of easily adjusting a Young's modulus of a cured product as an optical fiber primary coating layer within a preferred range.

Examples of the commercially available product of the component (B) include Aronix M-111, M-113, M-114, and M-117 (manufactured by Toagosei Co., Ltd.), KAYARAD, TC110S, R629, and R644 (manufactured by Nippon Kayaku Co., Ltd.), IBXA and Viscoat-3700 (manufactured by OSAKA ORGANIC CHEMICAL IND. LTD.), Upimer UV SA1002 and SA2007 (manufactured by Mitsubishi Chemical Holdings), VISCOAT 700 (manufactured by OSAKA ORGANIC CHEMICAL INDUSTRY LTD.), KAYARAD R-604, DPCA-20, -30, -60, -10, HX-620, D-310, and D-330 (manufactured by Nippon Kayaku Co., Ltd.), and Aronix M-210, M-215, M-315, and M-325 (manufactured by Toagosei Co., Ltd.).

The total amount of the component (B) in the radiation curable composition of the present invention is preferably 5 parts by mass or more and 45 parts by mass or less, and particularly preferably 10 parts by mass or more and 30 parts by mass or less, per 100 parts by mass of the composition.

The (meth)acrylate compounds as the component (B) may be used alone or in combination of two or more thereof.

Component (C): radiation polymerization initiator

The radiation curable composition of the present invention comprises a radiation polymerization initiator. The radiation polymerization initiator can also be referred to as a photopolymerization initiator. In addition, the radiation curable composition of the present invention can further comprise a photosensitizer in addition to the radiation polymerization initiator as the component (C) as necessary. Examples of the radiation polymerization initiator include 1-hydroxycyclohexyl phenyl ketone, 2,2-dimethoxy-2-phenylacetophenone, xanthone, fluorenone, benzaldehyde, fluorene, anthraquinone, triphenylamine, carbazole, 3-methylacetophenone, 4-chlorobenzophenone, 4,4'-dimethoxybenzophenone, 4,4'-diaminobenzophenone, Michler's ketone, benzoin propyl ether, benzoin ethyl ether, benzyl dimethyl ketal, 1-(4-isopropylphenyl)-2-hydroxy-2-methylpropan-1-one, 2-hydroxy-2-methyl-1-phenylpropan-1-one, thioxanthone, diethylthioxanthone, 2-isopropylthioxanthone, 2-chlorothioxanthone, 2-methyl-1-[4-(methylthio)phenyl]-2-morpholino-propane-1-one, 2,4,6-trimethylbenzoyldiphenylphosphine oxide, and bis-(2,6-dimethoxybenzoyl)-2,4,4-trimethylpentylphosphine oxide. Examples of a commercially available product of the radiation polymerization initiator include Omnirad184, 369, 651, 500, 907, 1700, 1870, 1173, and TPO H (manufactured by IGM Resins B.V.). In addition, examples of the photosensitizer include triethylamine, diethylamine, N-methyldiethanolamine, ethanolamine, 4-dimethylaminobenzoic acid, methyl 4-dimethylaminobenzoate, ethyl 4-dimethylaminobenzoate, and isoamyl 4-dimethylaminobenzoate. Examples of a commercially available product of the photosensitizer include ANTHRACURE UVS-1101, 581, 2171, and 1331 (manufactured by Air Water Performance Chemical Inc.).

A content of (C) the radiation polymerization initiator in the radiation curable composition of the present invention is preferably 0.1 parts by mass or more and 10 parts by mass or less, and particularly preferably 0.3 parts by mass or more and 7 parts by mass or less, per 100 parts by mass of the composition. In addition, the total amount of the radiation polymerization initiator and the photosensitizer is preferably 0.1 parts by mass or more and 10 parts by mass or less, and particularly preferably 0.3 parts by mass or more and 7 parts by mass or less, per 100 parts by mass of the composition, even when the photosensitizer is used in combination.

(C) The radiation polymerization initiators may be used alone or in combination of two or more thereof. In a case where the photosensitizer is contained in the composition, the photosensitizers may be used alone or in combination of two or more thereof.

Component (D): monomer having one or more ethylenically unsaturated groups that does not fall under component (A) or component (B)

The radiation curable composition of the present invention may comprise a monomer having one or more ethylenically unsaturated groups that does not fall under the component (A) or the component (B). In the present specification, such a compound is also referred to as a "component (D)". Examples of the component (D) include vinyl group-containing lactam, vinylimidazole, vinylpyridine, and triethylene glycol divinyl ether. Examples of the vinyl group-containing lactam include N-vinylpyrrolidone and N-vinylcaprolactam.

A content of the component (D) in the radiation curable composition of the present invention is, for example, 1 part by mass or more and 15 parts by mass or less per 100 parts by mass of the composition. In a case where the component (D) is contained in the composition, the components (D) may be used alone or in combination of two or more thereof.

Component (E): oligomer or polymer that does not fall under component (A) or component (B)

The radiation curable composition of the present invention may comprise an oligomer or a polymer that does not fall under the component (A) or the component (B). In the present specification, such a compound is also referred to as a "component (E)". Examples of the component (E) include a compound having a structure derived from the component (e) but having no (meth)acryloyl group and containing a urethane bond (-NHCOO-) in repeating units of the main chain, which can be produced in a case where the component (e) is used for the synthesis of (A) the urethane (meth)acrylate as described above, for example, a compound having two structures derived from the component (e) and containing a urethane bond (-NHCOO-) in repeating units of the main chain.

A content of the component (E) in the radiation curable composition of the present invention is preferably 30 parts by mass or less, and more preferably 20 parts by mass or less, per 100 parts by mass of the composition. In a case where the component (E) is contained in the composition, the components (E) may be used alone or in combination of two or more thereof.

The radiation curable composition of the present invention may comprise a silane coupling agent as long as the effect of the invention is not impaired. Examples of the silane coupling agent include vinyltrichlorosilane, vinyltriethoxysilane, vinyltris(β-methoxy-ethoxy)silane, β-(3,4-epoxycyclohexyl)-ethyltrimethoxysilane, γ-glycidoxypropyltrimethoxysilane, γ-glycidoxypropylmethyldiethoxysilane, γ-methacryloxypropyltrimethoxysilane, N-(β-aminoethyl)-γ-aminopropyltrimethoxysilane, N-(β-aminoethyl)-γ-aminopropyl trimethyldimethoxysilane, N-phenyl-γ-aminopropyltrimethoxysilane, γ-chloropropyltrimethoxysilane, γ-mercaptopropyltrimethoxysilane, γ-aminopropyltrimethoxysilane, bis-[3-(triethoxysilyl) propyl]tetrasulfide, bis-[3-(triethoxysilyl)propyl]disulfide, γ-trimethoxysilylpropyl dimethylthiocarbamyl tetrasulfide, and γ-trimethoxysilylpropyl benzothiazyl tetrasulfide. Examples of a commercially available product thereof include DOWSIL Z-6062 and SZ6030 (manufactured by Dow Toray Co., Ltd.) and KBE903, 603, and 403 (manufactured by Shin-Etsu Chemical Co., Ltd.). The silane coupling agent is preferably γ-glycidoxypropyltrimethoxysilane, γ-methacryloxypropyltrimethoxysilane, γ-mercaptopropyltrimethoxysilane, or γ-aminopropyltrimethoxysilane from the viewpoint of adhesion between the coating and the glass.

A content of the silane coupling agent in the radiation curable composition of the present invention is preferably 0.01 parts by mass or more and 2 parts by mass or less, more preferably 0.1 parts by mass or more and 1.5 parts by mass or less, and particularly preferably 0.3 parts by mass or more and 1.5 parts by mass or less, per 100 parts by mass of the composition, from the viewpoint of an adhesive force between the cured product of the radiation curable composition of the present invention and the glass fiber. In a case where the silane coupling agent is contained in the composition, the silane coupling agents may be used alone or in combination of two or more thereof.

In the radiation curable composition of the present invention, in addition to the components described above, various additives such as an antioxidant, a colorant, an ultraviolet absorber, a light stabilizer, a thermal polymerization inhibitor, a leveling agent, a surfactant, a storage stabilizer, a plasticizer, a lubricant, a solvent, a filler, an anti-aging agent, a wettability improver, and a coating surface improver can be compounded as necessary.

Examples of the antioxidant include IRGANOX245, 1010, 1035, 1076, and 1222 (manufactured by BASF Japan) and ANTIGENE P, 3C, Sumilizer GA-80, and GP (manufactured by Sumitomo Chemical Co., Ltd.). Examples of the ultraviolet absorber include TINUVIN P, 234, 320, 326, 327, 328, 329, and 213 (manufactured by BASF Japan) and Seesorb 102, 103, 501, 202, 712, and 704 (manufactured by SHIPRO KASEI KAISHA, LTD.). Examples of the light stabilizer include TINUVIN 292, 144, and 622LD and SANOL LS-770 and 765 (manufactured by BASF Japan).

In addition, the surfactant is not particularly limited, but a fatty acid ester type nonionic surfactant is preferable for effectively suppressing the occurrence of defects when an optical fiber wire is immersed in warm water, and a nonionic surfactant such as a glycerin fatty acid ester, a sorbitan fatty acid ester, a polyoxyethylene sorbitan fatty acid ester, or a polyoxysorbitol fatty acid ester is particularly preferable.

In addition, in the radiation curable composition of the present invention, other oligomers, polymers, and/or silane compounds (tetraethoxysilane and the like), other additives, and the like can be optionally compounded as components that do not fall under any of the components described above within a range in which the effect of the present invention is not impaired.

A method for preparing a radiation curable composition is not particularly limited, and can be performed, for example, by melt-blending in a reaction vessel equipped with a stirrer according to the related art.

A viscosity of the radiation curable composition of the present invention is preferably 0.1 to 10 Pa·s and more preferably 1 to 8 Pa·s at 25°C from the viewpoint of handleability and coatability. In the present specification, the viscosity of the composition is a viscosity measured by a B-type viscometer (for example, TVB-10H type, manufactured by Toki Sangyo Co. Ltd.).

A cured product of the radiation curable composition of the present invention has a low Young's modulus suitable as an optical fiber primary coating layer. From the viewpoint of being preferably used as an optical fiber primary coating layer, the Young's modulus of the cured product of the radiation curable composition of the present invention is preferably 0.1 MPa or more and 1.3 MPa or less (0.1 to 1.3 MPa) at 25°C. When the Young's modulus of the optical fiber primary coating layer is 0.1 to 1.3 MPa at 25°C, a so-called micro-bending loss caused by bending of the glass fiber when pressure is locally applied to the optical fiber can be prevented. The Young's modulus of the cured product of the radiation curable composition of the present invention is more preferably 0.2 MPa or more and 1 MPa or less (0.2 to 1 MPa). The Young's modulus of the cured product of the radiation curable composition of the present invention is measured by a method described in Examples described below.

An optical fiber comprising a cured product of the radiation curable composition of the present invention as an optical fiber primary coating layer usually further comprises an optical fiber secondary coating layer in contact with the outside of the optical fiber primary coating layer. A Young's modulus of the optical fiber secondary coating layer is preferably 1,000 MPa or more and more preferably 1,000 to 2,000 MPa. The Young's modulus of the optical fiber secondary coating layer can also be measured by the same method as the method for measuring the Young's modulus of the cured product of the radiation curable composition described in Examples described below. A fiber in which an optical fiber primary coating layer and an optical fiber secondary coating layer are provided in this order on a surface of a glass fiber can be used as an optical fiber wire.

An embodiment of a method for producing an optical fiber comprises a step of disposing the radiation curable composition of the present invention on at least a part of a surface of a glass fiber and curing the radiation curable composition to form an optical fiber primary coating layer; and a step of disposing and curing a radiation curable composition for an optical secondary coating layer on a surface of the optical fiber primary coating layer to form an optical fiber secondary coating layer. Examples of another embodiment include a method for producing an optical fiber, the method comprising a step of sequentially disposing the radiation curable composition of the present invention and a radiation curable composition for an optical fiber secondary coating layer on at least a part of a surface of a glass fiber, and curing these radiation curable compositions to form an optical fiber primary coating layer and an optical fiber secondary coating layer.

A method for disposing a radiation curable composition on a surface of a glass fiber is not particularly limited, but a method known in the related art can be used, and examples thereof include a method for applying a radiation curable composition to a surface and a method for immersing a surface in a radiation curable composition.

The method for curing the radiation curable composition is not particularly limited, and examples thereof include a method for irradiating a radiation curable composition with one or more radiations selected from an infrared ray, a visible light, an ultraviolet ray, an X-ray, an electron beam, an $\alpha$ ray, a $\beta$ ray, and a $\gamma$ ray.

As a general method for producing an optical fiber, there is a method for producing an optical fiber by applying the radiation curable composition of the present invention and a radiation curable composition for an optical fiber secondary coating layer while thermally melting and drawing a molten quartz material, and performing curing with radiation to form an optical fiber primary coating layer and an optical fiber secondary coating layer.

An optical fiber assembly such as an optical fiber ribbon or an optical fiber cable is an assembly comprising two or more optical fibers describe above, and can be a tape-shaped optical fiber or an optical fiber cable in which the optical fibers are fixed with a binding material.

[Examples]

Hereinafter, the present invention will be described in more detail with reference to Examples, but these Examples are not intended to limit the interpretation of the present invention.

[Synthesis of Urethane Acrylate and Preparation of Radiation Curable Composition]

(Example 1)

To a reaction vessel with a stirrer, 613.7 g of polypropylene glycol having a number average molecular weight of 4,000 (Uniol D-4000, manufactured by NOF CORPORATION), 80.2 g of 2,4-toluenediisocyanate (TOLDY-100, manufactured by Mitsui Chemicals, Inc.), and 11.7 g of propylene glycol (manufactured by Tokyo Chemical Industry Co., Ltd.) were added, and 0.2 g of 2,6-di-t-butyl-p-cresol (manufactured by Honshu Chemical Industry Co., Ltd.) was charged.

The mixture was heated to 30°C while stirring. 0.2 g of dibutyltin dilaurate (manufactured by Sakai Chemical Industry Co., Ltd.) was added, and then the mixture was slowly heated to 65°C for 15 minutes while stirring. Next, the mixture was stirred at 60°C for 1 hour and allowed to react. Thereafter, 26.1 g of 2-hydroxyethyl acrylate (manufactured by Nippon Shokubai Co., Ltd.) was added and allowed to react at 70°C for 1 hour, 10.6 g of 2-ethylhexanol was added, and the mixture was allowed to react at 70°C for 1 hour, thereby obtaining a urethane acrylate 1.

To the obtained urethane acrylate 1, 99.0 g of 4-acryloylmorpholine (manufactured by KJ Chemicals Corporation), 148.5 g of 2-ethylhexyl acrylate, and 9.9 g of 2,4,6-trimethylbenzoyldiphenylphosphine oxide (manufactured by Tokyo Chemical Industry Co., Ltd.) were added, and the mixture was stirred at 60°C for 1 hour, thereby obtaining a radiation curable composition 1.

(Examples 2 to 8 and Comparative Examples 9 and 10)

Raw materials were charged at the weight ratios shown in Table 1, and urethane acrylates 2 to 10 were obtained in the same operation as that of Example 1. Radiation curable compositions 2 to 10 were obtained in the same operation as that of Example 1 using the obtained urethane acrylates 2 to 10. In Table 1, the urethane acrylates 1 to 10 are referred to as UA1 to UA10, respectively. In Table 2, the radiation curable compositions in which UA1 to UA10 are compounded are referred to as compositions 1 to 10, respectively. Note that in Example 5 and Comparative Example 10, polypropylene glycol having a number average molecular weight of 3,000 (polypropylene glycol, diol type, 3,000, manufactured by FUJIFILM Wako Pure Chemical Corporation) was used instead of polypropylene glycol having a number average molecular weight of 4,000 (UNIOL D-4000, manufactured by NOF

CORPORATION) .

The results of synthesizing the urethane acrylate as the component (A) are shown in Table 1. The numerical value given to each raw material shown in Table 1 represents the weight ratio of the raw material used. In addition, the results of preparing the radiation curable composition using the obtained urethane acrylate are shown in Table 2.

EP 4 617 244 A1

[Evaluation Methods]

(1) Viscosity

The viscosities of the compositions obtained in Examples and Comparative Examples at 25°C were measured with a viscometer B8H-BII (manufactured by TOKYO KEIKI INC.). The results are shown in Table 2.

(2) Young's modulus

The Young's moduli of the cured layers (layered cured products) of the compositions obtained in Examples and Comparative Examples were measured as follows. The results are shown in Table 2.
A liquid radiation curable composition was applied onto a glass plate using an applicator bar having a thickness of 381 μm, the liquid radiation curable composition was irradiated with ultraviolet rays having an energy of 1 J/cm$^2$ in the air to be cured, and peeling was performed from the glass plate, thereby obtaining a test film. The cured test film was allowed to stand at a temperature of 23°C and a relative humidity of 50% for 24 hours, and then a strip-shaped sample was prepared so that the stretched part had a width of 6 mm and a length of 25 mm. The strip-shaped sample was subjected to a tensile test in accordance with JIS K7161-1 using a tensile tester 5542C4600 (manufactured by Instron Japan Co., Ltd.) under the same temperature and relative humidity conditions. The Young's modulus was determined from a tensile strength at a tensile speed of 1 mm/min and at 2.5% strain.

(3) Strength at Break and Elongation at Break

A liquid radiation curable composition was applied onto a glass plate using an applicator bar having a thickness of 354 um, and then the liquid radiation curable composition was irradiated with ultraviolet rays having an energy of 1 J/cm$^2$ in the air to be cured, thereby obtaining a test film. The strength at break and the elongation at break of the test film were measured under the following measurement conditions using a tensile tester (AGS-50G, manufactured by Shimadzu Corporation). The results are shown in Table 2.

<Measurement Conditions>

Tensile speed: 50 mm/min
Distance between marked lines (measurement distance): 25 mm
Measurement temperature: 23°C
Relative humidity: 50%

(4) Urethane Group Concentration in Urethane Acrylate

It was calculated from the amount of raw material charged used for synthesis of the urethane acrylate. The calculated values are shown in Table 1.

[Table 1]

| Table 1. Results of synthesizing urethane acrylate | | | | | | | |
|---|---|---|---|---|---|---|---|
| | | | Examples | | | | |
| | | | 1 | 2 | 3 | 4 | 5 |
| | | | UA1 | UA2 | UA3 | UA4 | UA5 |
| (a) | Polypropylene glycol (number average molecular weight: 4,000) | | 61.37 | 62.01 | 62.66 | 63.33 | |
| | Polypropylene glycol (number average molecular weight: 3,000) | | | | | | 58.02 |
| (d) | Propylene glycol | | 1.17 | 0.94 | 0.72 | 0.48 | 1.47 |
| | 1,4-Cyclohexanedimethanol | | | | | | |
| | 2,6-Di-t-butyl-p-cresol | | 0.02 | 0.02 | 0.02 | 0.02 | 0.02 |

13

(continued)

| Table 1. Results of synthesizing urethane acrylate | | | | | | | |
|---|---|---|---|---|---|---|---|
| | | | Examples | | | | |
| | | | 1 | 2 | 3 | 4 | 5 |
| | | | UA1 | UA2 | UA3 | UA4 | UA5 |
| (b) | 2,4-Toluenediisocyanate | | 8.02 | 7.56 | 7.09 | 6.62 | 10.10 |
| | Isophorone diisocyanate | | | | | | |
| | Hexamethylene diisocyanate | | | | | | |
| | Dibutyltin dilaurate | | 0.02 | 0.02 | 0.02 | 0.02 | 0.02 |
| (c) | 2-Hydroxyethyl acrylate | | 2.61 | 2.64 | 2.67 | 2.70 | 3.30 |
| (e) | 2-Ethylhexanol | | 1.06 | 1.08 | 1.09 | 1.10 | 1.34 |
| | Urethane group concentration in urethane acrylate (mmol/g) | | 1.24 | 1.17 | 1.10 | 1.02 | 1.56 |

| | | | Examples | | | Comparative Examples | |
|---|---|---|---|---|---|---|---|
| | | | 6 | 7 | 8 | 9 | 10 |
| | | | UA6 | UA7 | UA8 | UA9 | UA10 |
| (a) | Polypropylene glycol (number average molecular weight: 4,000) | | 59.60 | 61.60 | 60.52 | 64.86 | |
| | Polypropylene glycol (number average molecular weight: 3,000) | | | | | | 62.68 |
| (d) | Propylene glycol | | 1.13 | 1.17 | | | |
| | 1,4-Cyclohexanedimethanol | | | | 2.18 | | |
| | 2,6-Di-t-butyl-p-cresol | | 0.02 | 0.02 | 0.02 | 0.02 | 0.02 |
| (b) | 2,4-Toluenediisocyanate | | | | 7.90 | 5.58 | 6.91 |
| | Isophorone diisocyanate | | 9.92 | | | | |
| | Hexamethylene diisocyanate | | | 7.77 | | | |
| | Dibutyltin dilaurate | | 0.02 | 0.02 | 0.02 | 0.02 | 0.02 |
| (c) | 2-Hydroxyethyl acrylate | | 2.54 | 2.62 | 2.58 | 2.70 | 3.30 |
| (e) | 2-Ethylhexanol | | 1.03 | 1.07 | 1.05 | 1.10 | 1.34 |
| | Urethane group concentration in urethane acrylate (mmol/g) | | 1.20 | 1.24 | 1.22 | 0.86 | 1.07 |

[Table 2]

Table 2. Preparation results of radiation curable composition and measurement results of test film

|  |  | Examples | | | | |
|---|---|---|---|---|---|---|
|  |  | 1 | 2 | 3 | 4 | 5 |
|  |  | Composition 1 | Composition 2 | Composition 3 | Composition 4 | Composition 5 |
| Urethane acrylate |  | 74.27 | 74.27 | 74.27 | 74.27 | 74.27 |
| 4-Acryloylmorpholine |  | 9.90 | 9.90 | 9.90 | 9.90 | 9.90 |
| 2-Ethylhexyl acrylate |  | 14.85 | 14.85 | 14.85 | 14.85 | 14.85 |
| 2,4,6-Trimethylbenzoyldiphenylphosphine oxide |  | 0.99 | 0.99 | 0.99 | 0.99 | 0.99 |
| Total (parts by mass) |  | 100 | 100 | 100 | 100 | 100 |
| Viscosity (Pa·s) | @25°C | 5.9 | 4.7 | 3.6 | 2.8 | 5.3 |
| Young's modulus [MPa] | @1.00 J/cm2, 23°C | 0.99 | 0.97 | 0.95 | 0.96 | 1.00 |
| Strength at break [MPa] | @1.00 J/cm2, 23°C | 4.2 | 3.7 | 3.2 | 2.9 | 5.0 |
| Elongation at break [%] | @1.00 J/cm2, 23°C | 262 | 261 | 247 | 251 | 226 |

|  |  | Examples | | | Comparative Examples | |
|---|---|---|---|---|---|---|
|  |  | 6 | 7 | 8 | 9 | 10 |
|  |  | Composition 6 | Composition 7 | Composition 8 | Composition 9 | Composition 10 |
| Urethane acrylate |  | 74.27 | 74.27 | 74.27 | 74.27 | 74.27 |
| 4-Acryloylmorpholine |  | 9.90 | 9.90 | 9.90 | 9.90 | 9.90 |
| 2-Ethylhexyl acrylate |  | 14.85 | 14.85 | 14.85 | 14.85 | 14.85 |
| 2,4,6-Trimethylbenzoyldiphenylphosphine oxide |  | 0.99 | 0.99 | 0.99 | 0.99 | 0.99 |
| Total (parts by mass) |  | 100 | 100 | 100 | 100 | 100 |
| Viscosity (Pa·s) | @25°C | 5.7 | 5.8 | 7.7 | 2.9 | 2.5 |
| Young's modulus [MPa] | @1.00 J/cm2, 23°C | 0.80 | 0.96 | 0.97 | 1.3 | 1.2 |
| Strength at break [MPa] | @1.00 J/cm2, 23°C | 2.8 | 3.0 | 4.2 | 2.0 | 1.9 |
| Elongation at break [%] | @1.00 J/cm2, 23°C | 247 | 252 | 246 | 197 | 169 |

The radiation curable compositions obtained in Examples 1 to 8 exhibited comparable viscosities as compared with the radiation curable compositions obtained in Comparative Examples 9 and 10. In addition, the cured layers of the radiation curable compositions obtained in Examples 1 to 8 exhibited higher strength at break and elongation at break at comparable Young's moduli as compared with the cured layers of the radiation curable compositions obtained in Comparative Examples 9 and 10.

Therefore, it can be seen that the radiation curable compositions obtained in Examples 1 to 8 are more suitable as a radiation curable composition for forming an optical fiber primary coating layer than the radiation curable compositions obtained in Comparative Examples 9 and 10.

**Claims**

1.    A radiation curable composition for forming an optical fiber primary coating layer comprising:

   (A) a urethane (meth)acrylate obtained by reacting at least the following components (a), (b), (c), and (d):

      (a) a polyether diol having a number average molecular weight of 2,000 to 5,000;
      (b) a diisocyanate compound;
      (c) a hydroxyl group-containing (meth)acrylate compound; and
      (d) a diol having a molecular weight of 500 or less;

   (B) a (meth)acrylate compound other than the component (A); and
   (C) a radiation polymerization initiator.

2.    The radiation curable composition according to claim 1, wherein the component (d) is a diol having a molecular weight of 200 or less.

3.    The radiation curable composition according to claim 1 or 2, wherein the component (b) is tolylene diisocyanate (TDI) or isophorone diisocyanate (IPDI).

4.    A urethane (meth)acrylate obtained by reacting at least the following components (a), (b), (c), and (d):

      (a) a polyether diol having a number average molecular weight of 2,000 to 5,000;
      (b) a diisocyanate compound;
      (c) a hydroxyl group-containing (meth)acrylate compound; and
      (d) a diol having a molecular weight of 500 or less.

5.    The urethane (meth)acrylate according to claim 4, wherein the component (d) is a diol having a molecular weight of 200 or less.

6.    The urethane (meth)acrylate according to claim 4 or 5, wherein the component (b) is tolylene diisocyanate (TDI) or isophorone diisocyanate (IPDI).

## INTERNATIONAL SEARCH REPORT

| International application No. |
| --- |
| **PCT/JP2023/015141** |

| A. CLASSIFICATION OF SUBJECT MATTER |
| --- |
| ***C03C 25/285***(2018.01)i; ***C08F 290/06***(2006.01)i; ***C08G 18/32***(2006.01)i; ***C08G 18/48***(2006.01)i; ***C08G 18/66***(2006.01)i; ***C08G 18/67***(2006.01)i; ***C09D 4/00***(2006.01)i; ***C09D 4/02***(2006.01)i; ***C09D 7/63***(2018.01)i; ***G02B 6/44***(2006.01)i<br>FI: C03C25/285; C08G18/48; C08G18/66 074; C08G18/67; C08G18/32 003; C09D4/02; C09D7/63; G02B6/44 301A; C09D4/00; C08F290/06 |
| According to International Patent Classification (IPC) or to both national classification and IPC |

| B. FIELDS SEARCHED |
| --- |
| Minimum documentation searched (classification system followed by classification symbols)<br>C03C25/26-C03C25/36; C08F290/06; G02B6/44 |
| Documentation searched other than minimum documentation to the extent that such documents are included in the fields searched<br>Published examined utility model applications of Japan 1922-1996<br>Published unexamined utility model applications of Japan 1971-2023<br>Registered utility model specifications of Japan 1996-2023<br>Published registered utility model applications of Japan 1994-2023 |
| Electronic data base consulted during the international search (name of data base and, where practicable, search terms used) |

| C. DOCUMENTS CONSIDERED TO BE RELEVANT | | |
| --- | --- | --- |
| Category* | Citation of document, with indication, where appropriate, of the relevant passages | Relevant to claim No. |
| X | JP 10-231340 A (TAKEDA PHARMACEUTICAL CO., LTD.) 02 September 1998 (1998-09-02)<br>paragraphs [0010], [0064]-[0076] | 1-6 |
| X | JP 9-110947 A (JAPAN SYNTHETIC RUBBER CO., LTD.) 28 April 1997 (1997-04-28)<br>paragraphs 0004]-[0006], [0057]-[0085] | 4-6 |
| X | JP 63-275619 A (DESOTO, INC) 14 November 1988 (1988-11-14)<br>p. 1, lower left column, line 13 to p. 2, upper right column, line 1, p. 5, lower right column, line 15 to p. 6, upper right column, line 15 | 4-6 |

☐ Further documents are listed in the continuation of Box C.  ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **13 June 2023** | **27 June 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/015141**

| Patent document cited in search report | | | Publication date (day/month/year) | Patent family member(s) | Publication date (day/month/year) |
|---|---|---|---|---|---|
| JP | 10-231340 | A | 02 September 1998 | EP 849296 A2 p. 3, lines 33-49, p. 12, line 24 to p. 16, line 25 US 6075065 A | |
| JP | 9-110947 | A | 28 April 1997 | WO 1997/014737 A1 p. 1, line 33 to p. 3, line 4, p. 17, line 23 to p. 30, line 9 | |
| JP | 63-275619 | A | 14 November 1988 | (Family: none) | |

Form PCT/ISA/210 (patent family annex) (January 2015)

**EP 4 617 244 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6526012 B
- JP 2017141125 A
- JP 5788672 B